# EUROPEAN PATENT APPLICATION

(11) **EP 4 714 904 A1**
(43) Date of publication of application: **25.03.2026**
(21) Application number: 24201537.8
(22) Date of filing: 20.09.2024
(51) Int. Cl.: C01G 53/05

(54) **METHOD FOR PRODUCING METAL-CONTAINING HYDROXIDE OR OXYHYDROXIDE MATERIAL**

(71) Applicant: Umicore Battery Materials Finland Oy, 67900 Kokkola (FI)
(72) Inventor: VÄHÄTIITTO, Tuomo, 67900 Kokkola (FI)
(74) Representative: Umicore RDI Patent Department

(57) **Abstract**

A method for producing a metal-containing hydroxide or oxyhydroxide particulate material, the method comprising the steps of:
(a) providing a first slurry comprising ammonia and particles of hydroxide or oxyhydroxide of metals M_{c};
(b) reducing a level of ammonia (NH_{3(aq)}) from at least a portion of the first slurry to obtain a seed slurry; and
(c) combining the seed slurry with streams of an aqueous solution (Aₛ) containing salts of metals Mₛ and an aqueous solution (Bₛ) containing a precipitating agent, thereby obtaining a second slurry comprising particles having a layer of hydroxide or oxyhydroxide of Mₛ on the particles of the seed slurry,

wherein the M_{c}=Ni_{1-xc-yc-zc}Mn_{xc}Co_{yc}A_{zc} with 0≤xc≤0.85, 0≤yc≤0.35, 0≤zc<0.1, and 0.15≤1-xc-yc-zc≤1; and
wherein the Mₛ=Ni_{1-xs-ys-zs}MnₓₛCo_{ys}A_{zs} with 0.55≤xs≤0.85, 0≤ys≤0.35, 0≤zs<0.1, and 0.15≤1-xs-ys-zs≤0.45.

## Description

### TECHNICAL FIELD

In general, the present disclosure relates to the preparation of a metal-containing hydroxide or oxyhydroxide material, also referred to as precursor material and pCAM, which is suitable for the production of a cathode active material (CAM).

### BACKGROUND

A rechargeable ion battery, such as a lithium-ion battery, comprises a negative electrode (anode), an electrolyte, and a positive electrode (cathode). The cathode typically includes a transition metal oxide as a cathode active material capable of intercalating and deintercalating ions to generate electrical energy. These transition metal oxides are generally prepared from transition metal hydroxides, oxides, or oxyhydroxides, produced typically by co-precipitation, which combines a metal salt solution and an alkali solution containing a precipitating agent in the presence of a complexing agent.

Cathode materials are critical to rechargeable batteries and have a significant impact on overall performance. Extensive research and development have focused on these materials and their precursors. Key trends include improving particle sphericity, which affects properties such as packing density and electrochemical performance. Since the sphericity of the cathode material is inherited from the precursor material, it is essential to produce precursor materials with high sphericity.

In one prior art solution, the pCAM material is produced in a multi-step process. First, seeds of the material are precipitated in a continuous mode process. A portion of these seeds are then grown to the desired size in at least one batch mode precipitation step. This method has been shown to improve sphericity over a single step precipitation process.

Despite extensive research into improved precipitation methods for the production of pCAMs, challenges remain in achieving spherical pCAM material in certain multi-step processes. This problem is particularly pronounced when the Mn metal content is significantly high, such as 50 mol%, 60 mol% or more of the total metal content, and when the median particle size D50 of such a material is moderate, such as less than 10 µm, 6 µm, or even smaller, such as less than 5 µm.

### SUMMARY

An object of the present disclosure is to provide improved methods for producing positive electrode active precursor material when, at least during a portion of the precipitation, Mn is the most abundant of the precipitated metals. A further object is to enhance the precipitation methods, resulting in improved structural characteristics of high manganese pCAM materials. Still a further object is to enhance such precipitation methods when the target median particle size (D50) of high manganese pCAM material is less than 6 µm.

One object of the present disclosure is achieved by providing a method for producing a metal-containing hydroxide or oxyhydroxide material according to claim 1. The method comprises the steps of:
(a) providing a first slurry comprising ammonia and particles of hydroxide or oxyhydroxide of metals M_{c};
(b) reducing a level of ammonia (NH_{3(aq)}) from at least a portion of the first slurry to obtain a seed slurry; and
(c) combining the seed slurry with streams of an aqueous solution (Aₛ) containing salts of metals Mₛ and an aqueous solution (Bₛ) containing a precipitating agent, thereby obtaining a second slurry comprising particles having a layer of hydroxide or oxyhydroxide of Mₛ on the particles of the seed slurry,
wherein the M_{c}=Ni_{1-xc-yc-zc}Mn_{xc}Co_{yc}A_{zc} with 0≤xc≤0.85, 0≤yc≤0.35, 0≤zc≤0.1, and 0.15≤1-xc-yc-zc≤1; and wherein the Mₛ=Ni_{1-xs-ys-zs}MnₓₛCo_{ys}A_{zs} with 0.55≤xs≤0.85, 0≤ys≤0.35, 0≤zs<0.1, and 0.15≤1-xs-ys-zs≤0.45.

In this disclosure an element "A" provided in M_{c} and Mₛ as an additional element having a content of zc and zs, respectively, is either one or more selected from Ba, Ca, Ce, Cr, La, Mg, Mo, Nb, Sr, Ti, Y, V, W, Zn, and Al.

It has been observed that reducing the ammonia level in the first slurry prior to combining it as a seed slurry with the reagents of a solution (Aₛ) containing salts of metals Mₛ and an aqueous solution (Bₛ) containing a precipitating agent, in the precipitation process according to claim 1, improves the sphericity of pCAM obtained, particularly for pCAM having a manganese content exceeding 50 mol% of the total metal content, as demonstrated by the examples provided in the present disclosure.

Furthermore, it has been observed that the method according to the disclosure slows down the process compared to comparative processes that introduce ammonia in step (c). This results in enhanced structural parameters, such as tap density and specific surface area (BET), as demonstrated by the examples provided in the present disclosure.

Various embodiments are disclosed in the claims and the description of the present disclosure. The embodiments and examples recited in the claims and description are freely combinable with one another, unless otherwise expressly stated. Throughout the disclosure, where numerical ranges are given, the ranges include endpoint values unless otherwise expressly stated.

### DETAILED DESCRIPTION

In the following detailed description, preferred embodiments are described in detail to enable the disclosure to be practiced. Although the technology of the disclosure is described with reference to these specific preferred embodiments, it will be understood that the disclosure is not limited to these preferred embodiments. To the contrary, the disclosure includes numerous alternatives, modifications, and equivalents, as will become apparent from consideration of the following detailed description.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

As used herein, the term "and/or", when used in a list of two or more items, means that any one of the listed items can be used alone, or any combination of two or more of the listed items can be used. For example, when a composition is described as containing components X, Y and/or Z, the composition may contain X alone; Y alone; Z alone; X and Y in combination; X and Z in combination; Y and Z in combination; or X, Y and Z in combination.

In the present disclosure all given pH values refer to values which are measured at a temperature of 20 °C, unless otherwise stated.

In the present disclosure, the hydroxide particles/particulate compounds produced may include, in addition to a pure hydroxide phase, an oxyhydroxide phase or a combination thereof. Which phase, either a hydroxide or an oxyhydroxide phase or the combination thereof, is formed in the process depends, in particular, on the oxidation reaction conditions, as will be appreciated by those skilled in the art.

In one aspect, the present disclosure relates to a method for producing a metal-containing hydroxide or oxyhydroxide material, the method comprises the steps of:
(a) providing a first slurry comprising ammonia and particles of hydroxide or oxyhydroxide of metals M_{c};
(b) reducing a level of ammonia (NH_{3(aq)}) from at least a portion of the first slurry to obtain a seed slurry; and
(c) combining the seed slurry with streams of an aqueous solution (Aₛ) containing salts of metals Mₛ and an aqueous solution (Bₛ) containing a precipitating agent, thereby obtaining a second slurry comprising particles having a layer of hydroxide or oxyhydroxide of Mₛ on the particles of the seed slurry,
wherein the Mₑ=Ni_{1-xc-yc-zc}Mn_{xc}Co_{yc}A_{zc} with 0≤xc≤0.85, 0≤yc≤0.35, 0≤zc≤0.1, and 0.15≤1-xc-yc-zc≤1; and wherein the Mₛ=Ni_{1-xs-ys-zs}MnₓₛCo_{ys}A_{zs} with 0.55≤xs≤0.85, 0≤ys≤0.35, 0≤zs<0.1, and 0.15≤1-xs-ys-zs≤0.45.

Alternatively or additionally, M_{c} may be presented in the following manner: M_{c} comprises:
- Mn in a content of xc', wherein 0.0≤xc'≤85 mol%, relative to M_{c};
- Co in a content of yc', wherein 0.0≤yc'≤35 mol%, relative to M_{c};
- A in a content of zc', wherein A comprises at least one element selected from Ba, Ca, Ce, Cr, La, Mg, Mo, Nb, Sr, Ti, Y, V, W, Zn, and Al, wherein 0.0≤zc'≤10 mol%, relative to M_{c}; and
- Ni in a content of tc', wherein tc'=(100-xc'-yc'-zc')mol% and 15≤tc'≤100 mol% relative to M_{c}.

Alternatively or additionally, Mₛ may be presented in the following manner, Mₛ comprises:
- Mn in a content of xs', wherein 55≤xs'≤85 mol%, relative to Mₛ;
- Co in a content of ys', wherein 0.0≤ys'≤35 mol%, relative to Mₛ;
- A in a content of zs', wherein A comprises at least one element selected from Ba, Ca, Ce, Cr, La, Mg, Mo, Nb, Sr, Ti, Y, V, W, Zn, and Al, and wherein 0.0≤zs'≤10 mol%, relative to Mₛ; and
- Ni in a content of ts', wherein ts'=(100-xs'-ys'-zs')mol% and 15≤1-xs'-ys'zs'≤45 mol% relative to Mₛ.

Accordingly, the method comprises at least three steps, hereinafter also referred to as step (a), step (b) and step (c), respectively. The method may include further optional steps.

The further optional steps may include, for example, a subsequent step to step (c), which may be due to the median particle size D50 of the second slurry being comparable to a desired target particle size. At this point, the slurry can be removed from the reactor, for example via the bottom valve, and delivered to post-processing, such as washing, filtering and drying, to obtain a powdered pCAM product.

The metal content values of M_{c} and Mₛ, such as xc, xc', yc, yc', etc. can be measured by the inductively coupled plasma optical emission spectroscopy (ICP-OES) method, for example. It can be understood that the expression "≥0" in the chemical formulas includes the absence of an element.

In one embodiment of the present disclosure, wherein A in the formula of M_{c} or Mₛ is either one or more elements selected from Ba, Ca, Ce, Cr, La, Mg, Mo, Nb, Sr, Ti, Y, V, W, Zn, and Al.

The D50 value can be measured using a particle size analyzer such as a laser diffraction analyzer, for example. The D50 value, also known as the particle size distribution or the median value of the particle size distribution, is the value of the particle diameter at 50% in the cumulative distribution.

In one embodiment of the present disclosure, the seed slurry obtained from step (b) contains ammonia (NH_{3(aq)}) less than or equal to 0.4 g/l, or less than or equal to 0.3 g/l, or less than or equal to 0.2 g/l or less than or equal to 0.1 g/l. When the ammonia level of the seed slurry is within these ranges, the secondary particles in the reaction slurry are less likely to agglomerate with each other, thus improving the sphericity of the particles obtained in step (c).

In one embodiment of the present disclosure, the seed slurry obtained from step (b) is devoid (i.e. free) of ammonia (NH_{3(aq)}).

The term "concentration of NH_{3(aq)}" or "containing ammonia (NH_{3(aq)})" or the like, as used in this disclosure, refers to the concentration of ammonia in an aqueous solution or slurry. As appreciated by those skilled in the art the NH_{3(aq)} concentration can be measured for example by using a commercially available titrator such as the Metrohm 848 Titrino Plus or a similar device.

In step (b), the way of the reducing a level of ammonia (NH_{3(aq)}) is not particularly limited. It can be done, for example, by heating the first slurry, or a portion of it, to remove the ammonia from the slurry to obtain the seed slurry. Alternatively or additionally, the level of ammonia can be reduced by decanting the first slurry, or a portion of it, to obtain the seed slurry.

In one embodiment of the present disclosure, step (c) comprises recovering particles of hydroxide or oxyhydroxide of metals M_{c} from the first slurry and combining the recovered particles with a solution (D) comprising water to obtain the seed slurry. Advantageously, the solution (D) is free of ammonia. In one embodiment the solution (D) is water, preferably distilled water.

In one embodiment of the present disclosure, step (c) comprises removing mother liquor from at least a portion of the first slurry and replacing the removed mother liquor with a solution, such as the solution (D), containing at least water to obtain a seed slurry containing a reduced level of ammonia as compared to the first slurry. Advantageously, the solution (D) is free of ammonia.

In one embodiment of the present disclosure, step (a) comprises combining, preferably in a continuous manner, streams of an aqueous solution (A_{c}) containing salts of metals M_{c}, an aqueous solution (B_{c}) containing a precipitating agent, and an aqueous solution (C) containing a source of ammonia (NH₃) to obtain the first slurry by precipitation. When the precipitation in step (a) is carried out in a continuous manner, it is possible to ensure that the particle size of the obtained first slurry is sufficiently small, such that its median particle size D50 is for example close to 1.0 µm, in addition to a high reaction throughput.

In embodiments where the first slurry is provided by a precipitation process, step (a) may be performed in, for example, a stirred tank reactor. The stirred tank reactor is a reaction vessel equipped with means for carrying out the precipitation process, such as stirring and reaction solution feed means. Furthermore, when such precipitation is carried out in a continuous manner, the stirred tank reactor is equipped with an overflow means for providing a continuous flow of the first slurry.

In one embodiment of the present disclosure, the pH is maintained at 12-13 during the precipitation of the first slurry during step (a), determined at 20°C. Maintaining the pH in this range ensures that a balance between generating new nuclei and growing the existing nuclei may occur. If the pH is above 13, there is a risk that nucleation will dominate over particle growth and the slurry will become too viscous. If the pH is below 12, there is a risk that particle growth will dominate over nucleation, resulting in higher than desired particle growth in the first precipitation step of the multi-step process.

In one embodiment of the present disclosure, in the precipitating of the first slurry, during step (a), the NH_{3(aq)} concentration of the first slurry is maintained at 1.0-5.0 g/l or 1.0-3.0 g/l. Maintaining the NH_{3(aq)} concentration in this range ensures that the precipitation process of step (a) may be in stabile state. If the NH_{3(aq)} concentration is higher/lower than shown in these ranges, there is a risk of particle size fluctuations in the continuous process.

In one embodiment of the present disclosure, the median particle size D50 in the first slurry is 0.7-3.0 µm or 0.7-2.0 µm. In some embodiments, the median particle size D50 in the first slurry is equal to or less than 1.0 µm. When the particle size of the first slurry is in these ranges, the metal-containing hydroxide or oxyhydroxide material obtained as the final product can be obtained in the multi-step process to the desired particle size and to ensure that the sphericity of the final product particles is as high as possible.

In one embodiment of the present disclosure, the M_{c} is defined such that xc≥0.55 and 1-xc-yc-zc≤0.45. In other words, at these xc values, also the solution (A_{c}) is also one in which manganese is the most abundant metal, as is the case in the solution (Aₛ) in this disclosure.

In one embodiment of the present disclosure, the combining the streams of the aqueous solution (A_{c}), the aqueous solution (B_{c}) containing a precipitating agent, and the aqueous solution (C) containing a source of ammonia (NH₃), i.e., in the precipitation process to obtain the first slurry in the of step (a), the step is performed at a temperature in the range of from 10 to 85°C, preferably at temperatures in the range of from 20 to 70°C or from 30 to 65°C.

Step (c) may be carried out in a stirred tank reactor having a reaction vessel equipped with a stirring and reaction solution feed means. In an embodiment step (c) is carried out in a batchwise operated stirred tank reactor.

In one embodiment of the present disclosure, in step (c) the pH of the second slurry is maintained at 9.0-11.5, as determined at 20°C. Maintaining the pH in this range ensures that a precipitate resulting from the precipitation of the metals Mₛ contained in the solution (Aₛ) with the precipitating agent contained in the solution (Bₛ) grows on the particles present in the slurry instead of nucleating new particles. If the pH is above 11.5, there is a risk that nucleation will occur limiting particle growth and widening the span. If the pH is below 9.0, there is a risk of unwanted particle agglomeration, resulting in higher than desired particle growth and/or reduced sphericity of the particles obtained in the second or subsequent precipitation step of the multi-step process.

In one embodiment of the present disclosure, in step (c) the streams of the solution (Aₛ) and the solution (Bₛ) are combined in a batchwise manner, preferably wherein step (c) is continued until the median particle size D50 in the second slurry is 2.5-15.0 µm or 2.5-10.0 µm or 2.5-6.0 µm.

In one embodiment of the present disclosure, step (c) is performed at a temperature in the range of from 10 to 85°C, preferably at temperatures in the range of from 20 to 70°C or from 30 to 65°C.

The aqueous solution (B_{c}) and/or (Bₛ) containing an alkali metal hydroxide is not particularly limited and general aqueous solutions of alkali metal hydroxides such as sodium hydroxide and potassium hydroxide can be used. The precipitating agent, such as alkali metal hydroxide, can be added directly to the reaction mixture/slurry and combined with the other reaction solutions but is preferably added as an aqueous solution from the point of view of ease of pH control. In the case when the precipitating agent is alkali metal hydroxide, the concentration of the aqueous solution of alkali metal hydroxide is preferably 20 wt.% to 50 wt.%, more preferably 20 to 30 wt.%. By controlling the concentration of the solution (B_{c}) and/or (Bₛ) to such a range, it is possible to prevent the pH from increasing locally at the point of addition while suppressing the amount of solvent, typically water, supplied to the reactor, and thus to easily control the particle size distribution of the prepared material.

In one embodiment of the present disclosure, the precipitating agent contained in the solution (B_{c}), in step (a), and the solution (Bₛ), in step (c), comprises at least one alkali metal hydroxide such as sodium hydroxide or potassium hydroxide.

In one embodiment of the present disclosure, step (a) and/or step (c) is performed in an inert atmosphere. This can be achieved by introducing nitrogen gas, a rare gas, a noble gas, or a mixture of these gases into the vessel of a stirred tank reactor used for the step.

In one embodiment of the present disclosure, a clarifier or concentrator (i.e., a filtering device) is used in step (a), step (b) and/or step (c) to remove mother liquor. Such filter device(s) is (are) connected to the stirred tank reactor in such a manner that mother liquor can be removed, but the solids are retained in the reactor.

The salts of the metals M_{c} and Mₛ are water soluble salts of nickel and cobalt and manganese and may preferably be the respective water-soluble salts of Ni2+ and Co2+ and Mn2+. The water-soluble salts of the metals may be, for example, nitrates and sulfates, for instance. In one embodiment, the aqueous solution (A_{c}) in step (a) and/or the aqueous solution (Aₛ) in step (c) contains sulfate salts of metal M_{c} and Mₛ, respectively.

The solution (A_{c}) in step (a) and/or the solution (Aₛ) in step (c) is prepared by dissolving compounds containing transition metals (Ni, Co, Mn, and optionally metal A). In the precipitation process, the ratio of metal elements in the solutions containing the transition metals is approximately the same as the composition ratio in the obtained hydroxide or oxyhydroxide material. For this reason, the composition of each metal element in the solutions (A_{c}) and (Aₛ) used can be appropriately adjusted according to the intended composition of the material obtained from the process. The compounds of transition metal elements (Ni, Co, Mn, and optionally metal A) used in the preparation of the solutions (A_{c}) and (Aₛ) are not particularly limited but it is preferable to use water-soluble nitrates, sulfates, and hydrochlorides due to ease of handling and it is particularly preferable to suitably use sulfates due to cost and of preventing mixing of halogen. The concentration of the solution (A_{c}) and/or (Aₛ) is preferably 100 g/l or more and 400 g/l or less. When the concentration of the solution (A_{c}) and/or (Aₛ) is less than 100 g/l, the amount of precipitated (crystallized) material per batch decreases and thus the productivity decreases in some use cases. On the other hand, when the concentrations of the solution (A_{c}) and/or (Aₛ) exceed 400 g/l, the concentrations exceed the saturation concentrations at room temperature, and it is thus concerned that crystals of a metal compound will be redeposited to clog the supply lines and the like.

The method of providing the streams of the solutions of the method according to the present disclosure, such as (A_{c}), (Aₛ), (B_{c}), (B_{c}) or (C), is not particularly limited. For example, they may be fed by pumping means that are advantageously capable of controlling their flow rates, such as metering pumps, while being sufficiently stirred during their combination in the precipitation process step.

In the embodiments of the present disclosure where the source of ammonia is combined in step (a), the source of ammonia is preferably in solution form, such as ammonia water, and its concentration is preferably in the range of from 10 to 30 wt%, for example.

In one embodiment of the present disclosure, no ammonia is provided in step (c). In one embodiment of the present disclosure, step (c) omits the addition of an ammonia (NH3) source. When the reaction slurry of step (c) is free of ammonia, the secondary particles are less likely to agglomerate during the second precipitation step of the multi-step process. This may result in improved sphericity and/or enhances structural characteristics, such as tap density and surface area, of the particles obtained from the process, as demonstrated in the examples below.

In one embodiment of the present disclosure, step (b) comprises ammonia recovering from the first slurry.

In one embodiment of the present disclosure, the recovered ammonia is provided upstream in step (a) at least partially as the aqueous solution (C). This enables to provide a partially closed or substantially closed process with respect to ammonia-containing components.

Modifications of the disclosure will occur to those skilled in the art and to those who make or use the disclosure. Therefore, it is understood that the embodiments described above are merely for illustrative purposes and not intended to limit the scope of the disclosure, which is defined by the following claims, as interpreted according to the principles of patent law, including the doctrine of equivalents.

### EXPERIMENTAL ANALYSIS USED IN THE EXAMPLES AND THE

### COMPARATIVE EXAMPLES

The following analysis methods are used in the Examples and the Comparative Example:

### A) pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

### B) NH3(aq) concentration analysis

The NH3(aq) concentration was measured from a reactor sample by end point titration using an instrument of Metrohm 848 Titrino Plus. One milliliter of sample solution was added to a titration vessel. 30-40 ml of deionized water and 1 ml of 1M NaOH were added. Sample was titrated to the end point by 0.1M HCl.

### C) Particle size distribution (PSD) analysis

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. D50 is defined as the particle size at 50% of the cumulative volume % distribution.

### D) Surface area analysis

The specific surface area (SSA) of the samples, including cathode active material precursors and final products, was measured using the standard Brunauer-Emmett-Teller (BET) method according to ISO 9277, performed on a Quantachrome^{®} Autosorb instrument. A powder sample was placed in the sample tube and heated at 90 °C under nitrogen (N2) gas for 2 hours to remove adsorbed species. Before the BET measurement, the sample was degassed at 200 °C for 6 hours to eliminate moisture completely. The instrument conducted the nitrogen adsorption test at 77 K. By obtaining the nitrogen isothermal absorption/desorption curve, the total specific surface area of the sample in m²/g was derived.

### E) Tap density analysis

The tap density (TD) measurement was conducted using a J. Engelsmann Stamping Volumeter STAV II instrument. A graduated measuring cylinder (100 ml) containing the sample (with a mass W, approximately 60-120 g) was mechanically tapped 5000 times, following the ASTM B-527 tap density measurement procedure. The initial powder volume was recorded and tapping continued until no further change in volume (V in cm³) or mass (W) was observed. The TD was calculated as TD = W/V.

### F) Inductively Coupled Plasma Optical Emission Spectrometry (ICP-OES) measurement

The pCAM material examples as described herein below are measured by the Inductively Coupled Plasma - Optical Emission Spectrometry (ICP-OES) method using an Agillent ICP 720-OES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this solution is used for ICP-OES measurement. The contents/compositions of Ni, Mn, and Co are expressed as mol% of the total of these contents.

### H) Particle circularity analysis

The circularity of the obtained pCAM material was determined using an image analysis algorithm programmed in the Python programming language using the Python Pillow Library (PIL) according to the following steps:

| | |
|---|---|
| Step 1) | Open the file containing a 750X magnification SEM image of the pCAM material sample to be analyzed. |
| Step 2) | Determine the area of a particle Pᵢ by counting the number of pixels that belong to the particle Pi. |
| Step 3) | Determine the radius rᵢ of a perfect circle Cᵢ with the same area as Pᵢ. |
| Step 4) | Determine the centroid cᵢ of the particle Pᵢ, where the centroid cᵢ is the center of mass of the particle Pᵢ, where the coordinates of the centroid cᵢ are the average of the coordinates of each pixel belonging to Pᵢ. |
| Step 5) | Determine the area of the overlap Oᵢ between the particle Pᵢ and the perfect circle Ci with the radius rᵢ and the center cᵢ. |
| Step 6) | Divide the area of Oᵢ by the area of the particle Pᵢ to get the circularity of the particle Pᵢ, where the circularity has a value between 0 and 1, where 1 indicates perfect circularity of the particle. |
| Step 7) | Repeat steps 2 through 6 for all particles shown in the image as a whole. |
| Step 8) | Calculate the circularity of the sample by determining the average value of the circularities of the determine particles. |

### I) Scanning Electron Microscopy (SEM) analysis

The circularity of the pCAM material were analyzed by using the images from a scanning electron microscopy (SEM) technique. The measurement is performed with a JEOL JSM 7100F under a high vacuum environment of 9.6x10-5 Pa at 25 °C.

### EXAMPLES AND COMPARATIVE EXAMPLES

The present disclosure is further illustrated in the following examples and comparative examples.

### Example 1 (EX1)

A positive electrode active precursor material EX1 was prepared by the following multi-step process:

| | |
|---|---|
| S1) | Seed slurry (i.e. first slurry) preparation process: First, a starting solution was prepared by adding 10 L of DI water, 0.1 L of 55 g/L aqueous ammonia solution, and 0.1 L of 220 g/L NaOH solution to a 30 L CSTR reactor equipped with a turbine impeller and an overflow system through which slurry is removed. The reactor temperature was set at 45 °C and maintained throughout the process. An inert atmosphere was maintained in the reaction vessel by passing N2 gas through the reactor. Next, 120g/L nickel and manganese sulfate solution with Ni:Mn molar ratio of 35:65, 55 g/L aqueous ammonia solution, and 220 g/L NaOH solution were added continuously at a feed rate of 2.0 L/h, 1.81 L/h, and 0.09 L/h, respectively. The reaction mixture was stirred at a stirring speed of 1200 rpm. The NH3(aq) concentration in the reaction mixture was kept between 1.5-2.0 g/L, and the pH of the reaction mixture was kept between 12.7-13.0 by adjusting the feeding of the aqueous ammonia solution and the feeding of the NaOH solution, respectively. The reaction was performed in a continuous mode. When the reaction reached a stable state, a reaction resultant, i.e., the aqueous slurry of Ni_{0.35}Mn_{0.65}(OH)₂ particles with a D50 of about 1.0 µm, analyzed by the PSD analysis method described above, was collected from the overflow of the reaction vessel. |
| S2) | An amount of 2500 mL of the collected seed slurry with a solids content of 120 g/L was heated until its NH_{3(aq)} concentration was analyzed to be 0 g/L. |
| S3) | Next, the ammonia-free seed slurry obtained from S2, and 6.25 L of DI water were added to provide a starting solution for a stirred tank reactor with a liquid volume of 8.75 L, equipped with a turbine impeller for stirring and a |
| | concentrator (i.e. a filtering device) for withdrawing mother liquor from the reactor. The pH of the starting solution was adjusted to 10.8 by the addition of 220 g/L NaOH solution, followed by heating and maintaining at 45°C. Nitrogen gas was supplied trough the reactor to prevent oxidation during precipitation reaction. Then, reagents consisting of 120 g/L nickel and manganese sulfate solution with Ni:Mn molar ratio of 35:65 and 220 g/L NaOH solution were continuously added to the reactor at an average feed rate of 8.4 mL/h for the nickel and manganese sulfate solution, while the NaOH solution was added such that the molar ratio of OH- ions provided to the metals fed was about 2, respectively. The pH of a slurry thus obtained was maintained around 10.7-10.9 by adjusting the NaOH solution feed. Mixing was set to 1200 rpm. The process was carried out in a batchwise manner, with a portion of the mother liquor obtained occasionally being withdrawn from the reactor through the filtering device to continue the reaction. The feeding of the reagents was stopped when the particles reached a median particle size D50 of 3.0 µm. |
| S4) | The slurry obtained from S3 was washed and filtered, and the cake obtained was dried for 24 hours in an oven at 120°C under nitrogen gas. |

### Comparative Example 1 (CEX1)

A positive electrode active precursor material CEX1 was prepared according to the same method as EX 1 except that after S2) the NH_{3(aq)} concentration was analyzed to be 0.43 g/l.

### Comparative Example 2 (CEX2)

A positive electrode active precursor material CEX1 was prepared according to the same method as EX 1 except that after S2) the NH3(aq) concentration was analyzed to be 0.51 g/l.

### Comparative Example 3 (CEX3)

A positive electrode active precursor material CEX3 was prepared according to the same method as EX 1 except that in step S3) after 8 hours from the start of the step a feed of 55 g/L aqueous ammonia solution was started and maintained such that the ammonia to metal molar ratio of the feed was 0.4.

The NH₃ concentration of the reaction slurry was analyzed to be 1.97 g/l at 2 hours and 3.38 g/l at 6 hours from the start of the ammonia feed, i.e., from 10 hours and 14 hours, respectively, from the start of S3.

### Discussion of the results

Table 1 provides an overview of the process conditions of the examples, including the initial NH3 concentration and the pH and temperature at the start and during process step S3, as well as the duration of the entire process step S3. It also details the particle size D50 at the start and at two and four hours into S3, along with the average particle growth during the first two hours of S3. Table 2 provides a summary of the compositional and structural characteristics of the resulting powder product from the examples, including metal composition in mol%, particle size D50, tap density, specific surface area (BET), and circularity.

As shown in Table 1, the EX1 process with an initial NH3 concentration of zero results in a significantly longer precipitation time of 28.5 hours compared to 16 to 14 hours for the comparative examples to reach the target particle size of 3 µm. In addition, the particle size growth is significantly higher in the first four hours in CEX1 and CEX2 compared to EX1. A similar trend is observed in the average particle growth during the first two hours. These differences indicate that agglomeration occurs in secondary particles, resulting in a decrease in structural properties as shown in Table 2. In CEX3, the particle growth during the first four hours is comparable to that in EX1 due to the zero initial NH3 concentration. However, the addition of ammonia, which started eight hours after the start of S3, significantly accelerated the growth as the target size was reached within 14 hours. This indicates strong agglomeration, as shown by the decreased circularity value in Table 2.

As shown in Table 2, EX1 has a significantly higher tap density value of 1.45 g/cm³ compared to the 1.22 to 1.39 g/cm³ range of the comparative examples. Similarly, the specific surface area measured by the BET method is higher in EX1 (22.34 m²/g) compared to the 19.05 to 20.58 m²/g range of the comparative examples. In addition, the circularity value of EX1 (0.91) is higher compared to the values of the comparative examples, which range from 0.82 to 0.88.

While this disclosure describes several embodiments, it will be understood by those skilled in the art that various changes can be made, and equivalents can be substituted for elements thereof without departing from the scope of the disclosed embodiments. In addition, many modifications can be made to adapt a particular situation or material to the teachings of this disclosure without departing from the scope thereof. Therefore, this disclosure is not intended to be limited to the particular embodiments disclosed as the best mode contemplated for carrying out this disclosure. It should also be understood that the embodiments disclosed herein are to be considered only in a descriptive sense and not for purposes of limitation. Descriptions of features or aspects of each example should be considered as available for other similar features or aspects of other embodiments.

**Table 1**

| Process ID | NH₃ concent ration of the seed slurry | pH/temper ature [°C] of the reaction slurry | Particle size D50 [µm] | | | Average particle growth for first two hours [µm/h] | Total duration of S3 [h] |
|---|---|---|---|---|---|---|---|
| | | | 0 h | 2 h | 4 h | | |
| EX1 | 0.0 | 10.8/45 | 1.2 | 1.3 | 1.6 | 0.05 | 28.5 |
| CEX1 | 0.43 | 10.8/45 | 1.1 | 2.0 | 2.3 | 0.45 | 16.0 |
| CEX2 | 0.51 | 10.8/45 | 1.3 | 1.4 | 2.0 | 0.55 | 16.0 |
| CEX3 | 0.0 | 10.8/45 | 1.1 | 1.2 | 1.5 | 0.05 | 14.0 |

**Table 2**

| Sample ID | Composition [mol%] | | Particle size D50 [µm] | Tap density [g/cm³] | Specific surface area (BET) [m²/g] | Circularity |
|---|---|---|---|---|---|---|
| | Ni | Mn | | | | |
| EX1 | 35.3 | 64.7 | 3.0 | 1.45 | 22.43 | 0.91 |
| CEX1 | 35.4 | 64.6 | 3.0 | 1.39 | 20.47 | 0.88 |
| CEX2 | 35.4 | 64.6 | 3.0 | 1.22 | 19.05 | 0.82 |
| CEX3 | 35.2 | 64.8 | 3.0 | 1.27 | 20.58 | 0.86 |

## Claims

1. A method for producing a metal-containing hydroxide or oxyhydroxide material, the method comprising the steps of:
(a) providing a first slurry comprising ammonia and particles of hydroxide or oxyhydroxide of metals M_{c};
(b) reducing a level of ammonia (NH_{3(aq)}) from at least a portion of the first slurry to obtain a seed slurry; and
(c) combining the seed slurry with streams of an aqueous solution (Aₛ) containing salts of metals Mₛ and an aqueous solution (Bₛ) containing a precipitating agent, thereby obtaining a second slurry comprising particles having a layer of hydroxide or oxyhydroxide of Mₛ on the particles of the seed slurry,
wherein the M_{c}=Ni_{1-xc-yc-zc}Mn_{xc}Co_{yc}A_{zc} with 0≤xc≤0.85, 0≤yc≤0.35, 0≤zc≤0.1, and 0.15≤1-xc-yc-zc≤1; and
wherein the Mₛ=Ni_{1-xs-ys-zs}MnₓₛCo_{ys}A_{zs} with 0.55≤xs≤0.85, 0≤ys≤0.35, 0≤zs<0.1, and 0.15≤1-xs-ys-zs≤0.45.

2. The method of claim 1, wherein the seed slurry contains NH_{3(aq)} less than or equal to 0.4 g/l, or less than or equal to 0.3 g/l, or less than or equal to 0.2 g/l or less than or equal to 0.1 g/l.

3. The method of claim 1 or 2, wherein step (a) comprises combining, preferably in a continuous manner, streams of an aqueous solution (A_{c}) containing salts of metals M_{c}, an aqueous solution (B_{c}) containing a precipitating agent, and an aqueous solution (C) containing a source of ammonia (NH₃) to obtain the first slurry by precipitation.

4. The method of claim 3, wherein in the precipitating of the first slurry the pH is maintained at 12-13, determined at 20°C.

5. The method of claim 3 or 4, wherein in the precipitating of the first slurry the NH_{3(aq)} concentration of the first slurry is maintained at 1.0-5.0 g/l or 1.0-3.0 g/l.

6. The method of any of the preceding claims, wherein the median particle size D50 in the first slurry is 0.7-3.0 µm or 0.7-2.0 µm.

7. The method of any of the preceding claims, wherein in step (c) the pH of the second slurry is maintained at 9.0-11.5, as determined at 20°C.

8. The method of any of the preceding claims, wherein in step (c) the streams of the solution (Aₛ) and the solution (Bₛ) are combined in a batchwise manner, preferably wherein step (c) is continued until the median particle size D50 in the second slurry is 2.5-15.0 µm or 2.5-10.0 µm or 2.5-6.0 µm.

9. The method of any of the preceding claims, wherein A in the formula of M_{c} or Mₛ is either one or more elements selected from Ba, Ca, Ce, Cr, La, Mg, Mo, Nb, Sr, Ti, Y, V, W, Zn, and Al.

10. The method of any of the preceding claims, wherein the precipitating agent contained in the solution (B_{c}) and the solution (Bₛ) comprises at least one alkali metal hydroxide such as sodium hydroxide or potassium hydroxide.

11. The method of any of the preceding claims, wherein xc≥0.55 and 1-xc-yc-zc≤0.45.

12. The method of any of the preceding claims, wherein step (c) omits the addition of an ammonia (NH₃) source.

13. The method of any of the preceding claims, wherein step (b) comprises ammonia recovering from the first slurry.

14. The method of any of claims 3 to 11, wherein the recovered ammonia is provided upstream in step (a) at least partially as the aqueous solution (C).
